# EUROPÄISCHE PATENTANMELDUNG

(11) **EP 1 262 257 A2**
(43) Veröffentlichungstag der Anmeldung: **04.12.2002**
(21) Anmeldenummer: 02006737.7
(22) Anmeldetag: 23.03.2002
(51) Int. Cl.: B21F 23/00, B21F 27/10

(54) **Querdrahtzuführung für eine Gitterschweissmaschine, mit wählbarer Zangen-Bahnkurve, und Schweissmaschine mit einer derartigen Querdrahtzuführung**

(30) Priorität: 09.05.2001 DE 10122398
(71) Anmelder: Emil Jäger GmbH & Co. KG, D-48153 Münster (DE)
(72) Erfinder: Oeding Erdel, Rainer, 48329 Havixbeck (DE)
(74) Vertreter: Habbel, Ludwig (Lutz), Dipl.-Ing.

(57) **Zusammenfassung**

Bei einer Querdrahtzuführung für eine Gitterschweißmaschine, mit jeweils einen Niederhalter (2) und einen Gegenhalter (3) aufweisenden Haltezangen (1),
welche gemeinsam einen vereinzelten Querdraht (4) erfassen und entlang einer vorgegebenen Bahnkurve (6) zu den Schweißelektroden (7) transportieren, schlägt die Erfindung vor, dass die Haltezangen (1) um wenigstens zwei unabhängig voneinander beeinflussbare Achsen (12,15) beweglich sind, wobei jeder Achse (12,15) ein Antriebsmotor (16,17) zugeordnet ist, und wobei eine elektronische Steuerung vorgesehen ist, welche die Antriebsmotoren (16,17) ansteuert.

## Beschreibung

Die Erfindung betrifft eine Querdrahtzuführung nach dem Oberbegriff des Anspruches 1 sowie eine Schweißmaschine nach dem Oberbegriff des Anspruches 5 oder des Anspruches 7.

Bei Gitterschweißmaschinen ist es bekannt, die Querdrähte zunächst aus einem Magazin zu entnehmen und zu vereinzeln. Mittels einer Förderkette, die Mitnehmer aufweist, können die einzelnen Querdrähte in die Nähe des Elektrodenbereiches verbracht werden. Um sie anschließend in die Schweißposition zu bringen kann vorgesehen sein, die Querdrähte von der Förderkette bis in die Schweißposition frei fallen zu lassen. Hierbei ergibt sich jedoch aufgrund der maximal erzielbaren Beschleunigung eine Beschränkung der möglichen Taktzeit der Schweißmaschine. Zudem kann durch das Aufprallen nach dem freien Fall ein unerwünschtes Vibrieren des Querdrahtes in seiner Schweißposition auftreten, so dass die Schweißqualität beeinträchtigt werden kann.

Alternativ ist es bekannt, den zunächst vereinzelten Querdraht mittels einer Exzenter- und Hebelkinematik in die Schweißposition zu verbringen. Die hierdurch möglichen hohen Taktgeschwindigkeiten führen aufgrund der erheblichen, zu bewegenden Massen zu einem unruhigen Lauf der Maschine. Um ein möglichst steiles Eintauchen in die Gittermattenebene zu bewirken, sind vergleichsweise große Hebel und dementsprechend große, zu beschleunigende Massen erforderlich. Das steile Eintauchen der Haltezangen in die Gittermattenebene ist vorteilhaft, um auf diese Weise sicherzustellen, dass die bereits verschweißten Querdrähte nicht mit den Haltezangen kollidieren, wenn höhere Funktionsgeschwindigkeiten und dementsprechend kürzere Taktzeiten gefahren werden.

Bei sogenannten "Doppelschrittschweißmaschinen", bei denen gleichzeitig jeweils zwei Querdrähte verschweißt werden, ist zudem ein schnelles Hochziehen der Haltezangen aus der Gittermattenebene wünschenswert, damit nach erfolgter Verschweißung eines in Produktionsrichtung vorderen Querdrahtes die zugehörige Haltezange nicht mit dem gleichzeitig geschweißten hinteren Querdraht kollidiert und damit die Gittermatte möglichst schnell weiterbewegt werden kann, um kurze Taktzeiten und hohe Produktionsgeschwindigkeiten zu ermöglichen.

Aus der EP-A-0 399 996 ist eine Gitterschweißmaschine bekannt, bei der die Querdrähte mittels Positionierorganen positioniert werden, wobei die Positionierorgane Einstellmöglichkeiten bieten, um die Querdrähte in der gewünschten Querdrahtteilung sowie exakt orthogonal zu den Längsdrähten anordnen zu können, so dass die Bahnkurve, die der Querdraht beschreibt, wählbar ist. Auch aus der DE 36 35 017 C1, der DE 27 41 082 C2 sowie der Veröffentlichung "Ein flexibles Maschinensystem für das Drahtgitterschweißen" in DRAHT 34 (1983) 11, Seiten 540 - 543 sind Gitterschweißmaschinen mit entlang von Bahnkurven geführten Querdrähten bekannt.

Der Erfindung liegt die Aufgabe zugrunde, eine gattungsgemäße Querdrahtzuführung dahingehend zu verbessern, dass diese bei möglichst geringen zu bewegenden Massen einen an die jeweiligen Einsatzbedingungen möglichst einfach und optimal anzupassenden Bahnverlauf für die Haltezangen ermöglicht. Weiterhin liegt der Erfindung die Aufgabe zugrunde, eine Schweißmaschine zu schaffen, die unter Verwendung einer derartigen Querdrahtzuführung eine hohe Produktionsgeschwindigkeit und eine möglichst flexible Produktion von Schweißgittermatten ermöglicht.

Diese Aufgabe wird durch eine Querdrahtzuführung mit den Merkmalen des Anspruches 1 sowie durch eine Schweißmaschine mit den Merkmalen des Anspruches 5 oder des Anspruches 7 ermöglicht.

Die Erfindung schlägt mit anderen Worten vor, die Antriebe der Haltezangen frei programmierbar zu gestalten, so dass nahezu beliebige Bahnverläufe erzielt werden können. Hierdurch kann z. B. ein spätes und sehr steiles Eintauchen der Haltezangen in die Gittermattenebene ermöglicht werden und anschließend ein sehr schnelles und frühes Anheben der Haltezangen aus der Gittermattenebene. Durch die frei programmierbaren Antriebe lassen sich im Vergleich zu Kniehebel-, Hebel- oder Exzenterkonstruktionen die bewegten Massen verringern, so dass größere Beschleunigungen möglich werden, die ihrerseits einen ruhigeren Lauf der Maschine sowie besonders vorteilhafte Bahnverläufe ermöglichen und zudem kürzere Taktzeiten und damit höhere Produktionsgeschwindigkeiten der Schweißmaschine ermöglichen.

Durch die frei programmierbaren Bahnverläufe können innerhalb einer Gittermatte nahezu beliebige Gittermuster vorgesehen werden: Bei stets gleichem, automatisiertem Gittervorschub pro Takt können die Querdrähte mit unterschiedlichen Abständen verlegt werden, sofern die Schweißelektroden entsprechend bemessen sind. Die Querdrähte können von unterschiedlichen Abholpositionen abgeholt werden, so dass unterschiedliche Querdrahttypen mit beispielsweise unterschiedlichen Durchmessern verarbeitet werden können, welche die Querdrahtzuführung aus unterschiedlichen Magazinen oder Einschusskanälen abholt und in die Gittermattenebene verbringt.

Durch die Möglichkeit, besonders steil in die Mattenebene einzutauchen und aus dieser wieder herauszufahren, ergibt sich die Möglichkeit, auch bei hohen Produktionsgeschwindigkeiten Gittermatten mit besonders engen Querdrahtabständen zu fertigen, also Gittermatten besonders hoher Belastbarkeiten wirtschaftlich zu fertigen.

Vorteilhaft können die beiden Achsen, die unabhängig voneinander beeinflussbar sind, parallel zueinander und im Abstand zueinander angeordnet sein, so dass der gewünschte Bahnverlauf nicht dreidimensional im Raum, sondern exakt in einer Ebene liegt und die Aufnahme der Beschleunigungskräfte vereinfacht wird.

Abgesehen von der grundsätzlich vergleichsweise leichtgewichtige Konstruktion ergibt sich eine weitere Möglichkeit, die zu bewegenden Massen zu reduzieren, indem mehrere Haltezangen an einer gemeinsamen Traverse angeordnet sind, so dass sämtliche Haltezangen gleichzeitig bewegt werden, wobei die Traverse selbst nur durch wenige Antriebseinheiten bewegt werden kann, deren Anzahl erheblich geringer sein kann als die Anzahl der Haltezangen.

Vorteilhaft können besonders leichtgewichtige Antriebseinheiten vorgesehen sein, wie beispielsweise Zahnriemenantriebe, Kettenantriebe od. dgl. Dabei kann vorgesehen sein, Kosten und gewicht dadurch einzusparen, daß Wellen sämtliche Antriebseinheiten einer Achse verbinden und durch nur einen einzigen Antriebsmotor angetrieben sind, so dass eine besonders wirtschaftliche Bauform der Querdrahtzuführung ermöglicht wird.

Ein Ausführungsbeispiel einer Querdrahtzuführung wird anhand der Zeichnungen im folgenden näher erläutert. Dabei zeigt
- Fig. 1: in einer schematischen Seitenansicht eine Querdrahtzuführung und
- Fig. 2: in einer perspektivischen Ansicht ein praktisches Ausführungsbeispiel der Querdrahtzuführung von Fig. 1.

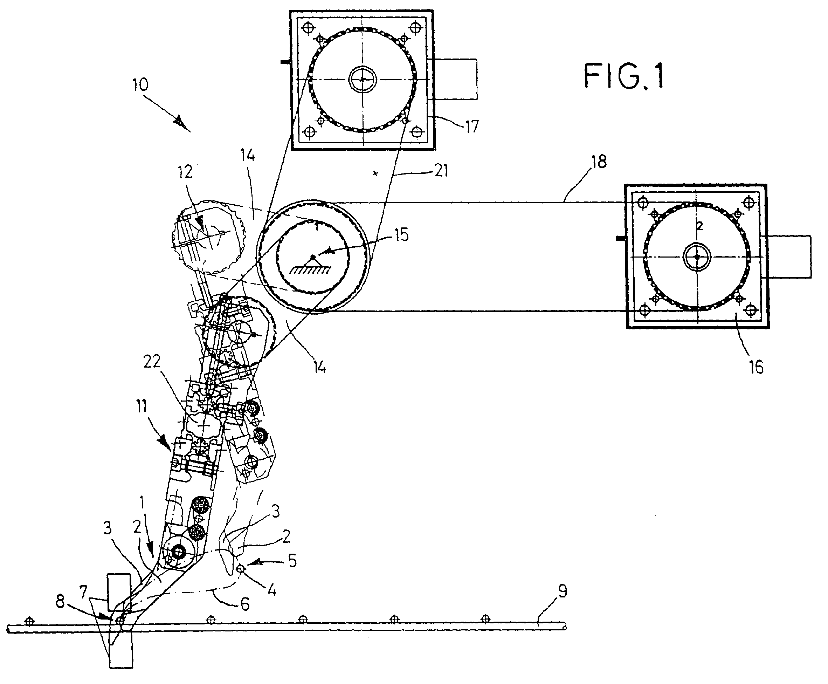

In Fig. 1 ist mit 1 eine Haltezange bezeichnet, die in an sich bekannter Weise mit einem Niederhalter 2 und einem Gegenhalter 3 ausgestaltet ist. Die Haltezange 1 nimmt einen Querdraht 4 an einer Abholposition 5 auf und bringt den Querdraht 4 entlang einer Bahnkurve 6 zwischen zwei Elektroden 7 in eine Schweißposition (bei 8), wo der Querdraht 4 zur Herstellung einer Drahtgittematte auf Längsdrähte 9 geschweißt wird. Von der Schweißposition 8 bewegt sich die Haltezange 1 entlang des Rückweges der Bahnkurve 6 zur Abholposition 5, um erneut einen Querdraht 4 aufzunehmen.

Bei dem in Fig. 1 dargestellten Ausführungsbeispiel ist die Haltezange 1 Teil einer Querdrahtzuführung 10 einer Doppelschrittschweißmaschine. Die Gittermatte wird dabei in Produktionsrichtung von links nach rechts vorgeschoben, und wie aus Fig. 1 ersichtlich ist, befindet sich die Haltezange 1 vor einem bereits verschweißten Querdraht 4, also rechts von dem Querdraht 4.

Die Haltezange 1 ist an einem Arm 11 befestigt, wobei dieser Arm 11 um eine erste Achse 12 verschwenkt werden kann. Diese erste Achse 12 ist an einem Ausleger 14 vorgesehen, der seinerseits schwenkbeweglich um eine zweite Achse 15 gelagert ist. Die Schwenkbewegung des Auslegers 14 um die Achse 15 erfolgt durch einen Antriebsmotor 16.

Ein zweiter Antriebsmotor 17 ist vorgesehen, der auf Antriebseinheiten einwirkt, die ebenfalls um die zweite Achse 15 drehbar sind und welche die Bewegung des Antriebsmotors 17 entlang dem Ausleger 14 weiterleiten, so dass durch diese Bewegung der Arm 11 um die erste Achse 12 schwenkbar ist. Die beiden Antriebsmotoren 16 und 17 können unabhängig voneinander angesteuert werden, so dass sich durch Überlagerung der entsprechenden Schwenkbewegungen um die Achsen 12 und 15 nahezu beliebige Bahnverläufe der Haltezangen 1 programmieren lassen.

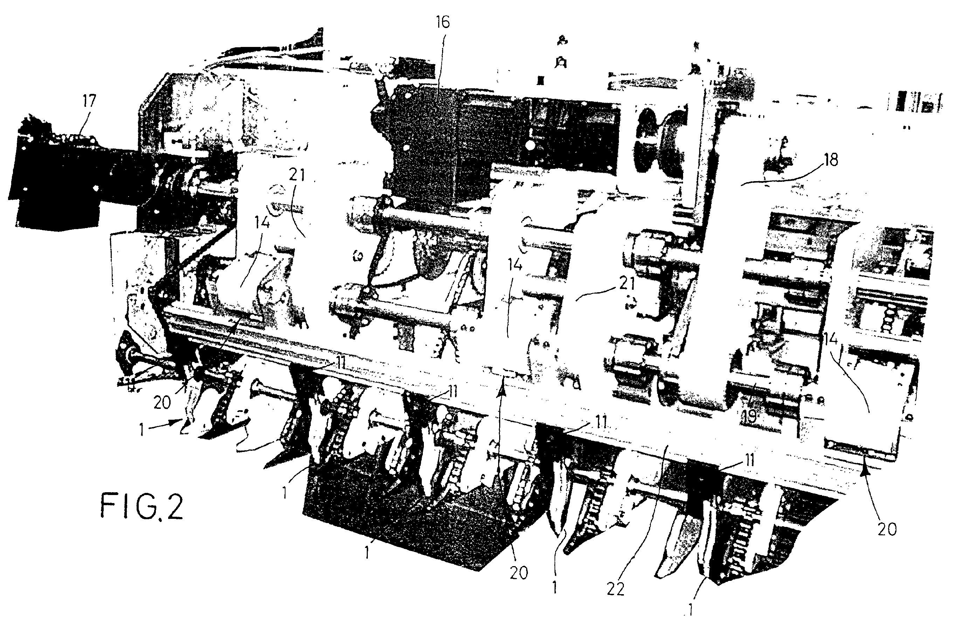

In Fig. 2 ist ein praktisches Ausführungsbeispiel der in Fig. 1 schematisch dargestellten Anordnung gezeigt. Der erste Antriebsmotor 16 wirkt über einen Zahnriemen 18 auf eine Welle 19 ein, die mit der zweiten Achse 15 gemäß Fig. 1 achsgleich ist. Auf der Welle 19 sind mehrere Antriebseinheiten 20 angeordnet, die von dem zweiten Antriebsmotor 17 über jeweils einen eigenen Zahnriemen 21 angetrieben sind und den Ausleger 14 um die zweite Achse 15, also um die Welle 19 umlaufend, verschwenken können. Die Haltezangen 1 sind gemeinsam an einer Traverse 22 befestigt, wobei die Traverse 22 mit den Antriebseinheiten 20 verbunden ist.

## Patentansprüche

1. Querdrahtzuführung für eine Gitterschweißmaschine,
mit wählbarer Zangen-Bahnkurve,
mit jeweils einen Niederhalter und einen Gegenhalter aufweisenden Haltezangen,
welche gemeinsam einen vereinzelten Querdraht erfassen und entlang einer vorgegebenen Bahnkurve zu den Schweißelektroden transportieren,
**dadurch gekennzeichnet,**
**dass** die Haltezangen (1) um wenigstens zwei unabhängig voneinander beeinflussbare Achsen (12, 15) beweglich sind,
wobei jeder Achse (12,15) ein Antriebsmotor (16, 17) zugeordnet ist,
und wobei eine elektronische Steuerung vorgesehen ist, welche die Antriebsmotoren (16, 17) ansteuert.

2. Querdrahtzuführung nach Anspruch 1, **dadurch gekennzeichnet, dass** die beiden Achsen (12, 15) beabstandet und parallel zueinander verlaufen.

3. Querdrahtzuführung nach Anspruch 1 oder 2, **dadurch gekennzeichnet, dass** mehrere Haltezangen (1) an einer gemeinsamen Traverse (22) angeordnet sind, wobei die Traverse (22) durch mehrere Antriebseinheiten (20) angetrieben ist, deren Anzahl geringer ist als die Anzahl der Haltezangen (1).

4. Querdrahtzuführung nach Anspruch 3, **dadurch gekennzeichnet, dass** die Antriebseinheiten (20) als Kraftübertragungsmittel, wie Kettentriebe, Zahntriebe oder Zahnräder ausgebildet sind, denen ein einziger gemeinsamer Antriebsmotor zugeordnet ist.

5. Schweißmaschine mit einer Querdrahtzuführung nach einem der vorhergehenden Ansprüche, **gekennzeichnet durch** wenigstens zwei Zubringereinheiten für Querdrähte, wie ein Querdrahtmagazin und einen Querdrahteinschuß.

6. Schweißmaschine nach Anspruch 5, **dadurch gekennzeichnet, dass** die Zubringereinheiten unterschiedliche Abholpositionen aufweisen, an denen der jeweilige Querdraht zur Übergabe an die Haltezangen (1) bereitgestellt wird.

7. Schweißmaschine mit einer Querdrahtzuführung nach einem der Ansprüche 1 bis 4, **dadurch gekennzeichnet, dass** die Schweißmaschine als Doppelschrittschweißmaschine ausgestaltet ist.
